# EUROPÄISCHE PATENTSCHRIFT

(11) **EP 0 635 612 B1**
(45) Veröffentlichungstag und Bekanntmachung des Hinweises auf die Patenterteilung: **26.02.1997**
(21) Anmeldenummer: 94109524.2
(22) Anmeldetag: 21.06.1994
(51) Int. Cl.: E05C 3/04, E05B 47/06, F16P 3/10, H01H 3/16

(54) **Vorrichtung zur Türverriegelung**
Doorlock device
Dispositif de verrouillage pour porte

(30) Priorität: 24.07.1993 DE 4324964
(43) Veröffentlichungstag der Anmeldung: 25.01.1995
(73) Patentinhaber: Klöckner-Moeller GmbH, 53115 Bonn (DE)
(72) Erfinder: Bruchschmidt, Frank, D-56132 Dausenau (DE); Trapp, Ulrich, D-53127 Bonn (DE); Bonn, Alfred, D-53227 Bonn (DE)

(56) Entgegenhaltungen:
- EP-A- 0 056 982
- EP-A- 0 184 033
- WO-A-83/00910
- DE-A- 4 033 992
- DE-U- 9 215 362
- US-A- 4 003 047

## Beschreibung

Die Erfindung beschreibt eine Vorrichtung zur Türverriegelung, um hinter der Tür befindliche und sonst nur durch die Tür zugängliche elektrische Schaltanlagen oder sonstige gefahrbringende Anlagen vor einem Zugriff im gefährdenden Zustand zu sichern.

Bekannte Vorrichtungen zur Türverriegelung bestehen aus einem in dem Schrank angeordneten Sicherheitsschalter, der einen Antriebskopf aufweist und in den ein an der Schranktür befestigtes Schlüsselelement formschlüssig eingreift, während die Tür geschlossen wird. Beim Öffnen der Tür gleitet der Schlüssel wieder aus dem Antriebskopf heraus. Die Sicherheitsschalter bewirken durch Betätigung des Schlüssels Türverriegelungs- und Türüberwachungsfunktionen. Die DE 40 37 566 Al beschreibt ein Sicherheitsschaltsystem, das durch Ein- und Ausstecken eines Schlüssels betätigbar ist. Der Schalter besitzt einen Kanal, in dem ein Schlüssel in einer Ein- und Austrittsbewegung gleiten kann. Der Schlüssel trifft auf ein Betätigungsorgan, welches eine sicherheitsrelevante Schalt- und Verriegelungsfunktion einleitet. Die DE 40 39 652 C1 macht einen Sicherheitsschalter mit Entriegelungsvorrichtung bekannt. Auch hierbei wird mittels eines codierten Betätigungsorganes, das die Wirkung eines Schlüssels hat, auf einen Sicherheitsschalter eingewirkt, der einen Antriebskopf mit einem Kanal aufweist. In diesen Kanal gleitet formschlüssig der Schlüssel und aktiviert Sicherheitsschaltfunktionen. Ein Schalter mit durch ein Betätigungsorgan verriegelbarem Schlüssel beschreibt die DE 38 10 287 Al. Die bekannten Vorrichtungen zur Türverriegelung verfolgen immer das gleiche Ziel: Es sollen die gefahrbringenden elektrischen Schaltanlagen oder sonstige Anlagen, die hinter der Tür installiert sind, vor unbeabsichtigtem oder unerlaubtem Zugriff gesichert werden. Schlüssel und Sicherheitsschalter befinden sich in einem großen Abstand vom Drehpunkt eines Türdrehverschlusses. Daher ist es bei den genannten Vorrichtungen von Nachteil, daß sich die Verwindungsfreudigkeit mittlerer und größerer Türen derart ungünstig auswirkt, daß nur eine ungenaue Einführung des Schlüsselelementes in den Einführkanal des Sicherheitsschalters möglich ist. Außerdem ist damit zwar die Tür verriegelt, die Schrankverschlußvorrichtung jedoch nicht, wodurch relativ hohe Zuhaltekräfte auftreten. Hinzu kommt, daß sich der große Einführradius des Schlüsselelementes in den Einführkanal des Sicherheitsschalters problematisch auswirkt. Die genannten Nachteile führen zu kraftaufwendiger Handhabung und beschleunigtem Verschleiß der Tür, des Türdrehverschlusses und des Verriegelungsmechanismus.

Aus der Druckschrift DE-GM 73 38 007 ist ein Türdrehverschluß für Schaltschranktüren bekannt, welches eine nach außen weisende Drehverschlußvorrichtung und eine damit kraftschlüssig verbundene, nach innen weisende Schließzunge aus einem abgekröpften einstückigen Stanzblechteil aufweist. Aus dieser Druckschrift sind keine Hinweise über die Anordnung und das Zusammenwirken mit einem Sicherheitsschalter zu entnehmen. Eine für den Fachmann naheliegend erscheinende Kombination dieses Türdrehverschlusses mit den bekannten und tangential zur Türachse steckbaren Schlüsselelementen ist hinsichtlich des Zusammenwirkens von Schlüsselelement und Sicherheitsschalter durch das toleranzbehaftete Einstecken und das Auftreten hoher Kräfte weiterhin mit erheblichen Nachteilen behaftet.

Der Erfindung liegt daher die Aufgabe zugrunde, eine Vorrichtung zur Türverriegelung zu schaffen, die nicht nur die Tür, sondern ebenso den Türdrehverschluß verriegelt, wobei durch einfache Maßnahmen eine geringe Zuhaltekraft der Tür, ein zentriertes Einführen des Schlüsselelementes in den Einführkanal des Sicherheitsschalters und eine kraft- und verschleißarme Handhabung erreicht wird.

Die Aufgabe wird erfindungsgemäß durch die Gesamtheit der Merkmale des Patentanspruchs 1 gelöst. Der Sicherheitssmechanismus ist in unmittelbarer Nähe vom Drehpunkt des Türdrehverschlusses angeordnet. Dadurch ergeben sich die wesentlichen Vorteile, daß nicht nur die Tür verriegelt wird, sondern auch und gleichermaßen der mechanische Türdrehverschluß. Die verschließende Drehbewegung der Drehverschlußvorrichtung bewirkt zunächst den mechanischen Verschluß der Schranktür und daran anschließend das mechanische Eingreifen des Schlüsselelementes in den Sicherheitsschalter. Bei der Drehbewegung der Drehverschlußvorrichtung bewegt sich das von dem Verschlußriegel geführte Schlüsselelement in den Sicherheitsschalter. Greift nun der Verriegelungsmechanismus des Sicherheitsschalters, indem das Herausziehen des Schlüsselelementes gesperrt wird, ist gleichzeitig auch die Drehbewegung der Drehverschlußvorrichtung mechanisch gesperrt. Erst durch die Passivierung des Sicherheitsschalters wird das Schlüsselelement mechanisch entriegelt und gleichzeitig auch die Drehverschlußvorrichtung freigegeben. Diese vorteilhafte Anordnung und Funktion bewirken eine sichere, stabile sowie verschleiß- und kraftarme Handhabung einer Tür, die mit der erfindungsgemäßen Vorrichtung ausgerüstet ist. Im übrigen können das Führungselement und der Verschlußriegel auch einstückig ausgebildet sein.

In den Unteransprüchen sind vorteilhafte Weiterbildungen der Erfindung dargelegt. Der besonders kurze Abstand zwischen der Drehachse der Tür und dem Sicherheitsschalter wird durch den stufenlos einstellbaren Neigungswinkel des Schlüsselelementes erreicht und bewirkt einen kleinen Einführradius. Mittels des Führungsrahmens und des Hohlnietes ist das Schlüsselelement formschlüssig und spielgebend geführt. Durch die Federkraft der Druckfeder wird das Schlüsselelement in einer permanent vorgespannten und abgewinkelte Lage gehalten, wobei der Neigungswinkel durch die Zentrierbuchsen begrenzt ist und innerhalb dieser Grenzen durch das Justierelement stufenlos einstellbar ist.

Nachfolgend soll die Erfindung anhand eines Ausführungsbeispiels und unter Bezugnahme auf die Zeichnung näher erläutert werden. Es zeigen
- **Figur 1:**: eine Anordnung der erfindungsgemäßen Vorrichtung, die als Seitenansicht im Schnittbild dargestellt ist;
- **Figur 1a:**: eine Anordnung nach der Fig. 1 mit beispielhaft in einem Schaltschrank montiertem Sicherheitsschalter, der von der erfindungsgemäßen Vorrichtung betätigt werden soll;
- **Figur 2:**: eine perspektivische Darstellung der erfindungsgemäßen Vorrichtung mit Ansicht auf die Rückseite des Schlüsselelementes;
- **Figur 3:**: eine perspektivische Darstellung der erfindungsgemäßen Vorrichtung als Vorderansicht auf das Schlüsselelement;
- **Figur 4:**: eine Draufsicht auf das einstückige L-förmige Stanzblechteil, das als Basiselement für die erfindungsgemäße Vorrichtung dient;
- **Figur 5:**: eine perspektivische Darstellung des in Fig. 4 dargestellten Stanzblechteiles;
- **Figur 6:**: eine beispielhafte Montageanordnung der erfindungsgemäßen Vorrichtung bei geschlossener Schaltschranktür und
- **Figur 7:**: die in Fig. 6 gezeigte Montageanordnung bei geöffneter Schranktür.

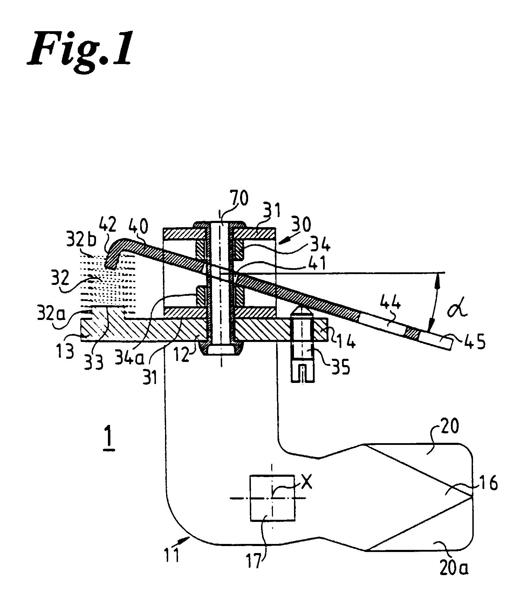

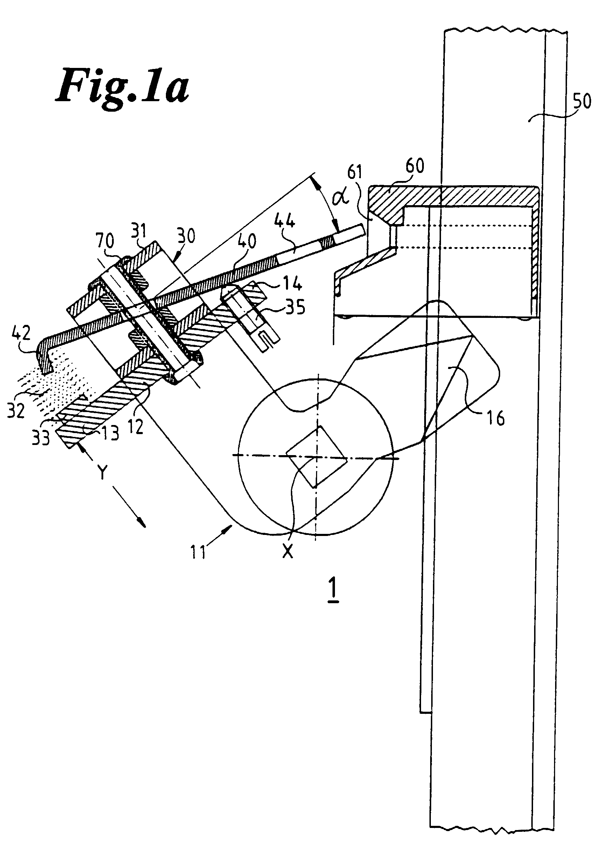

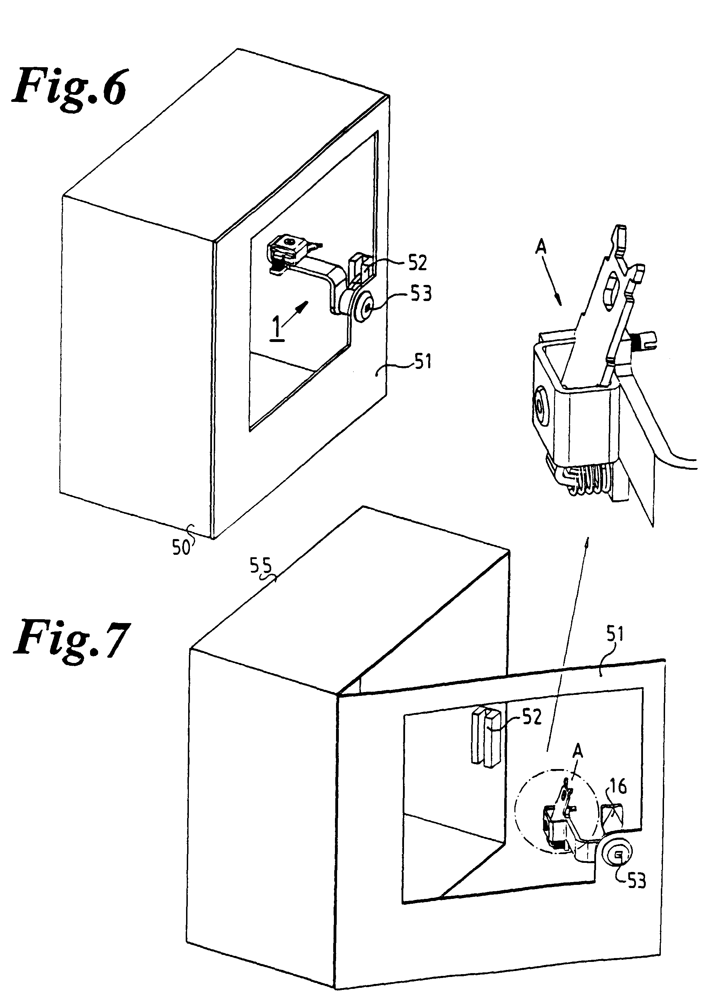

Nach Fig. 1 besteht ein Verschlußriegel 1 im wesentlichen aus einem Schließelement 11, einem Bügel 12, einem Führungselement 30 und einem Schlüsselelement 40. Das Schließelement 11 ist ein rechtwinklig flächiges Element. Ein zungenartiger Schließreiber 16 wirkt bei einer Drehbewegung um den Drehpunkt X mit einem Hintergriff 52 zusammen, der sich im Türrahmen 50 beispielsweise eines Schaltschrankes 55 befindet (Fig. 1a, Fig. 6). Ein Führungsrahmen 31 bildet den wesentlichen Bestandteil des Führungselementes 30. Der Führungsrahmen 31 ist formschlüssig an einer Lasche 15, die das äußere Ende des Bügels 12 bildet, angeordnet. Das Schlüsselelement 40 ist durch den Führungsrahmen 31 spielgebend geführt und stößt mit hakenförmigen Vorsprüngen 43, 43a gegen die Stirnkanten des Führungsrahmens 31. Ein Hohlniet 70 ist durch eine erste Bohrung des Führungsrahmens 31, die sich im Zentrum des Kopfteiles des Führungsrahmens 31 befindet, und weiter durch einen Durchbruch 41 des Schlüsselelementes 40 und durch eine zweite Bohrung im Zentrum der Auflagefläche des Führungsrahmens 31 geführt und reicht durch eine weitere Bohrung in dem Bügel 12. Der Hohlniet 70 dient als Befestigungselement für das Führungselement 30 auf dem Bügel 12. Die Lasche 15 verhindert das Verdrehen des Führungsrahmens 31. Der Durchbruch 41 ist in seinem Durchmesser wesentlich größer als der Außendurchmesser des Hohlnietes 70. Dadurch wird eine Beweglichkeit des Schlüsselelementes 40 erreicht, wobei eine Druckfeder 32 dafür sorgt, daß das Schlüsselelement 40 eine stabile Lage behält. Das Führungselement 30 weist innerhalb des Führungsrahmens 31 Zentrierbuchsen 34, 34a auf, die dafür sorgen, daß ein maximaler Neigungswinkel α des Schlüsselelementes 40 nicht überschritten wird. Dem Bügel 12 ist ein erster Vorsprung 13 angeformt, auf dem sich ein Zentrierzapfen 33 befindet. Die Druckfeder 32 findet mit ihrem ersten Ende 32a eine Abstützung auf den ersten Vorsprung 13 und wird durch den Zentrierzapfen 33 in ihrer Abstützung stabilisiert. Das zweite Ende 32b der Druckfeder 32 umfaßt eine Nase 42, die dem Schlüsselelement 40 auf seiner Rückseite angeformt ist. Die Druckfeder 32 ist derart dimensioniert, daß sie mit einer notwendigen Federdruckkraft das Schlüsselelement 40 permanent in der beschriebenen vorgespannten Lage hält. Der Neigungswinkel α ist veränderbar. Dafür ist ein Justierelement 35 vorgesehen. Das in diesem Ausführungsbeispiel als Justierschraube ausgeführte Justierelement 35 ist in einer Gewindebohrung eines zweiten Vorsprungs 14, der in einer Ebene zu dem ersten Vorsprung 13 liegt, geführt. Durch Verdrehen der Justierschraube 35 ist der Neigungswinkel α gegen die Federkraft der Druckfeder 32 in dem von den Zentrierbuchsen 34, 34a begrenzten Bereich veränderbar. Damit sind gegebene Montagetoleranzen auszugleichen.

Nach Fig. 1a befindet sich innerhalb des Schaltschrankes 55 am Türrahmen 50 oder an der Seitenwand ein beispielhaft als Sicherheitspositionsschalter 60 ausgeführter Sicherheitsschalter. Die Position des Verschlußriegels 1 befindet sich gerade in der Drehbewegung der Drehverschlußvorrichtung 53. Der Schließreiber 16 ist bereits mit dem Hintergriff 52 in Wirkverbindung, allerdings noch nicht in seiner endgültigen Verriegelungsstellung. Erst durch weitere Rechtsdrehung der Drehverschlußvorrichtung 53 tritt das Schlüsselelement 40 in den Einführkanal 61 des Sicherheitspositionsschalters 60 und betätigt dort aufgrund einer vorgebbaren Codierungskontur 45 einen mechanischen Entriegelungsmechanismus, der ein weiteres Eindringen des Schlüsselelementes 40 in den Sicherheitspositionsschalter 60 ermöglicht. In seiner Endstellung erreicht das Schlüsselelement 40 die waagerechte Position. Das Schlüsselelement 40 weist einen weiteren Durchbruch 44 auf, durch den ein an sich bekannter, senkrecht zur Einführachse des Schlüsselelementes 40 durch Feder- oder Magnetkraft betätigbarer Stößel (nicht dargestellt) einfahrt und das Schlüsselelement 40 für die Ausziehbewegung mechanisch verriegelt. Erst bei Entriegelung, das heißt durch mechanische oder magnetische Betätigung des Verriegelungsstößels, wird das Schlüsselelement 40 wieder freigegeben. Durch Linksdrehung der Drehverschlußvorrichtung 53 verlaßt zunächst das Schlüsselelement 40 den Einführkanal 61, bevor der Schließreiber 16 den Hintergriff 52 verläßt und die Tür zum Öffnen freigegeben wird. Die Druckfeder 32 sorgt für eine Elastizität des Schlüsselelementes 40 und gleicht bei dessen Ein- und Ausführbewegung den Weg des Einführradius aus, wobei eine Justage des Schlüsselelementes 40 bei der Montage durch das Justierelement 35 erfolgt. Somit erfährt das Schlüsselelement 40 ein paßgenaues Gleiten im Einführkanal 61, dessen innere Konturen der Codierungskontur 45 des Schlüsselelementes 40 angepaßt sind.

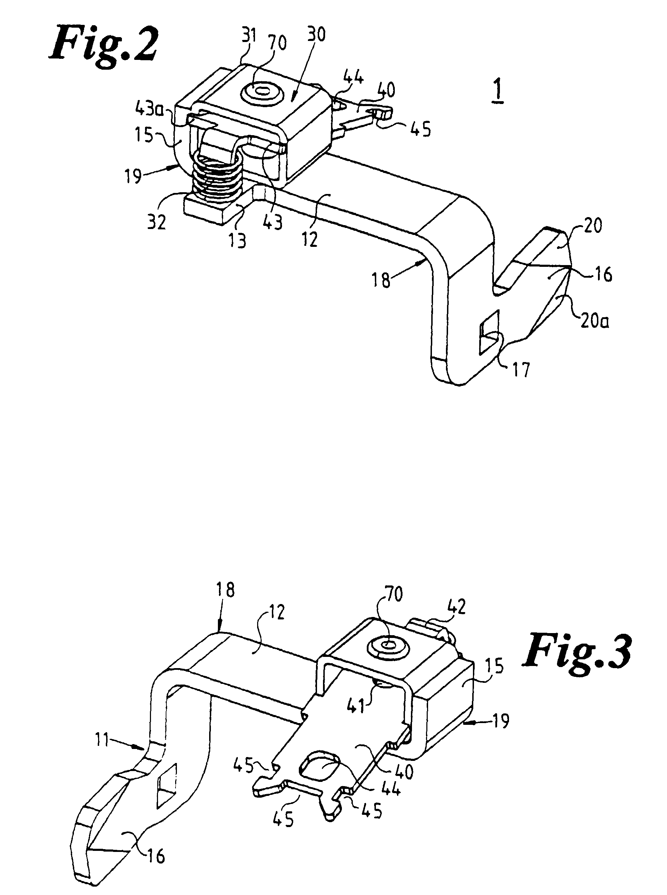

Aus Fig. 2 werden die Konturen und das Profil des Verschlußriegels 1 besonders deutlich. Das Schließelement 11 ist ein flächiges Winkelstück. Senkrecht zur Ebene des Schließelementes 11 ist der Bügel 12 in einem ersten Winkel 18 von 90° abgebogen. Das Ende des Bügels 12 bildet die Lasche 15, die parallel zur Ebene des Schließelementes 11 um 90° entgegengesetzt zum ersten Winkel 18 mit einem zweiten Winkel 19 abgebogen ist. Formschlüssig an der Lasche 15 ist das Führungselement 30 positioniert. Das Schlüsselelement 40 greift durch den Führungsrahmen 31 und stößt mit den hakenförmigen Vorsprüngen 43, 43a gegen dessen Stirnkanten. Deutlich wird auch, daß das Schlüsselelement 40 permanent in eine stabile Lage mit einem Neigungswinkel α gehalten wird. Dies bewirkt die Druckfeder 32, die sich auf dem ersten angeformten Vorsprung 13 des Bügels 12 mit ihrem ersten Ende 32a abstützt. Das zweite Ende 32b der Druckfeder 32 greift um die am Rücken des Schlüsselelementes 40 befindliche Nase 42. Der Führungsrahmen 31 ist mit dem Hohlniet 70 auf dem Bügel 12 befestigt. Der Hohlniet 70 ist durch den Durchbruch 41 des Schlüsselelementes 40 derart geführt, daß das Schlüsselelement 40 in axialer Richtung beweglich gelagert und in radialer Richtung zentriert sowie arretiert bleibt. Die Lasche 15 bewirkt eine stabile Lage des Führungselementes 30 und schützt vor Verdrehung. Das Schließelement 11 weist im Bereich seines flächigen Winkels ein Vierkantloch 17 auf. Die Drehverschlußvorrichtung 53 durchgreift von außen die Schranktür 51 (Fig. 7) und greift formschlüssig in das Vierkantloch 17 hindurch. Mit einer geeigneten Arretierungs- und Befestigungsvorrichtung wird der Verschlußriegel 1 auf diese Weise mit der Drehverschlußvorrichtung 53 verbunden. Die Zunge des Schließreibers 16 weist beidseitig je eine Einführschräge 20, 20a auf, über die sich die Schranktür 51 während des Schließvorganges in die optimale Verschlußposition bringt.

Nach Fig. 3 wird der Durchbruch 41 des Schlüsselelementes 40 sichtbar, durch den in axialer Richtung der Hohlniet 70 verläuft. Das Schlüsselelement 40 weist die besondere Codierungskontur 45 auf, die formschlüssig in die innere Kontur des Einführkanals 61 eingreift. Der weitere Durchbruch 44 gibt dem Verriegelungsstift (nicht dargestellt) des Sicherheitspositionsschalters 60 die Einfahrmöglichkeit zur Verriegelung.

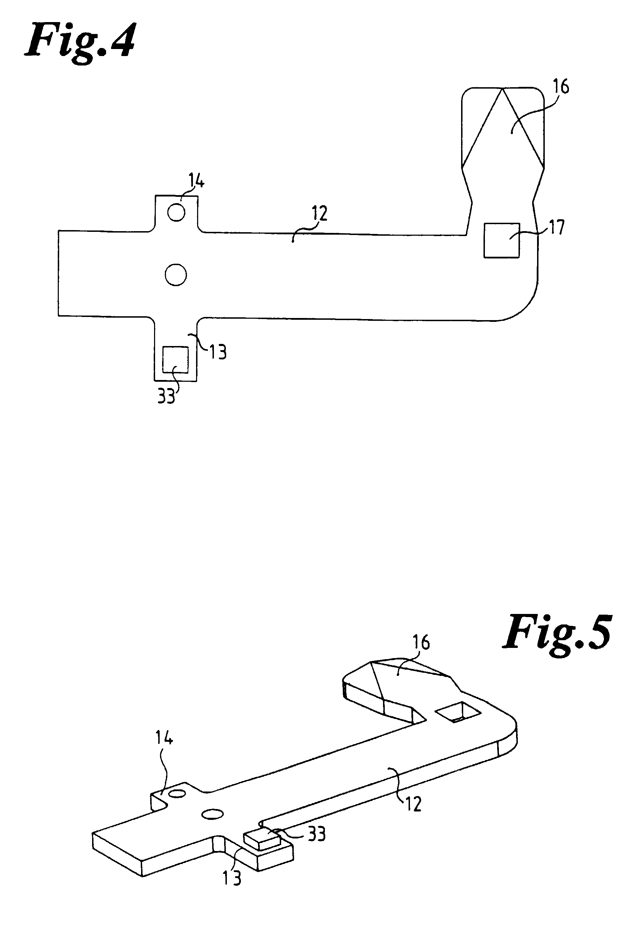

In Fig. 4 und Fig. 5 ist das einstückige L-förmige Stanzblechteil, das als Basiselement für die erfindungsgemäße Vorrichtung dient, gezeigt. Hierbei fehlen der erste Winkel 18 und der zweite Winkel 19 (Fig. 2), die letztlich dem Verschlußriegel 1 die erfindungsgemäße Form geben, wodurch eine Vorrichtung geschaffen werden kann, die die eingangs genannten besonderen Vorteile erreicht.

Eine praktische und beispielhafte Anwendung der Erfindung zeigt die Fig. 6. Diese Montageanordnung der erfindungsgemäßen Vorrichtung bei geschlossener Schaltschranktür 51 macht deutlich, wie der Verschlußriegel 1 angeordnet ist. Auf die Darstellung des Sicherheitspositionsschalters 60 wurde hier verzichtet. Der Schließreiber 16 ist gänzlich in den Hintergriff 52, der sich in dieser Darstellung an der Seitenwand des Schaltschrankes 55 befindet, eingefahren und hält die Tür 51 fest verschlossen. Das Schlüsselelement 40 liegt in der Betätigungslage für den Sicherheitspositionsschalter 60. Die Drehverschlußvorrichtung 53 wird in diesem Fall mit einem Vierkantschlüssel betätigt. Alternativ dazu kann die Drehverschlußvorrichtung ein Drehgriff oder Drehknopf sein.

Die Fig. 7 zeigt die in Fig. 6 gezeigte Montageanordnung bei geöffneter Schranktür 51. Dabei wird besonders verdeutlicht, daß sich der als Einzelheit A vergrößert dargestellte Betätigungsmechanismus für den Sicherheitspositionsschalter 60 in unmittelbarer Nähe des Türschloßdrehpunktes X befindet. Die Zuhaltekraft wird dadurch optimiert und die Verwindungsfreudigkeit der Schaltschranktür 51 ist hier am geringsten.

## Patentansprüche

1. Vorrichtung zur Türverriegelung mit folgenden **Merkmalen:**
- ein Türdrehverschluß, der an einer Tür an der ihrer Drehachse gegenüberliegenden Seite mittig angeordnet wird und der im wesentlichen aus einer nach außen weisenden Drehverschlußvorrichtung (53) und einem damit kraftschlüssig verbundenen Verschlußriegel (1) besteht, der nach innen weist und bei geschlossener Tür in einen am Türrahmen (50) oder dergleichen befindlichen Hintergriff (52) greift;
- der Verschlußriegel (1) besteht aus einem um 90° abgewinkelten Blechteil, dessen kurzer Schenkel als L-förmiges, im wesentlichen flächiges Schließelement (11) und dessen langer Schenkel als Bügel (12) derart ausgebildet ist, daß der Bügel (12) in einem Abstand (Y) vom Drehpunkt (X) des Verschlußriegels (1) um 90° von diesem abgewinkelt ist und an seinem freien Ende eine entgegengesetzt zum Schließelement (11) um 90° abgewinkelte Lasche (15) aufweist;
- an der Lasche (15) ist bündig ein Führungselement (30) angeordnet, in dem ein Schlüsselelement (40) beweglich gelagert ist;
- ein eine Türüberwachungs- und Verriegelungsfunktion bewirkender Sicherheitssschalter (60), der am Türrahmen (50) oder dergleichen angeordnet wird und der bei geschlossener Tür (51) durch Betätigung der Drehverschlußvorrichtung (53) in oder außer Verbindung mit dem Schlüsselelement (40) bringbar ist;
- das Schlüsselelement (40) ist innerhalb des Sicherheitsschalters (60) mit einem mechanisch oder magnetisch betätigbaren Verriegelungsstößel rückziehverhindernd bzw. freigebend wirkverbunden.

2. Vorrichtung nach Anspruch 1, **dadurch gekennzeichnet**, daß das Führungselement (30) aus einem Führungsrahmen (31) besteht, der im Zentrum seiner Oberfläche eine erste Bohrung und im Zentrum seiner Auflagefläche eine zweite Bohrung aufweist, durch die ein Hohlniet (70) oder dergleichen geführt ist, der durch eine weitere Bohrung des Bügels (12) reicht und als Befestigungselement des Führungsrahmens (31) dient.

3. Vorrichtung nach Anspruch 2, **dadurch gekennzeichnet**, daß der Hohlniet (70) oder dergleichen durch einen Durchbruch (41) des in dem Führungsrahmen (31) gelagerten Schlüsselelementes (40) greift, wobei der Innendurchmesser des Durchbruchs (41) größer als der Außendurchmesser des Hohlnietes (70) oder dergleichen ist.

4. Vorrichtung nach einem der Ansprüche 1 bis 3, **dadurch gekennzeichnet**, daß dem Bügel (12) ein erster Vorsprung (13) angeformt ist, auf dem sich eine Druckfeder (32) mit ihrem ersten Ende (32a) abstützt, wobei sie einen Zentrierzapfen (33) umgreift, und daß das zweite Ende (32b) der Druckfeder (32) eine an der Rückseite des Schlüsselelementes (40) angeformte und abgewinkelte Nase (42) umgreift, wodurch eine Federdruckkraft erreicht wird, die das Schlüsselelement (40) in einer permanent vorgespannten Lage hält.

5. Vorrichtung nach Anspruch 4, **dadurch gekennzeichnet**, daß die Federdruckkraft das Schlüsselelement (40) in einen zur Ebene des Bügels (12) maximal möglichen Neigungswinkel (α) zwingt.

6. Vorrichtung nach Anspruch 5, **dadurch gekennzeichnet**, daß der Neigungswinkel (α) von innerhalb des Führungsrahmens (31) angeordneten Zentrierbuchsen (34, 34a) begrenzt wird.

7. Vorrichtung nach Anspruch 5 oder 6, **dadurch gekennzeichnet**, daß dem Bügel (12) in derselben Ebene des ersten Vorsprungs (13) ein zweiter Vorsprung (14) angeformt ist, durch den ein geführtes Justierelement (35) für den Neigungswinkel (α) ragt, das sich entgegen der Federkraft der Druckfeder (32) an dem Schlüsselelement (40) abstützt.

8. Vorrichtung nach einem der vorstehenden Ansprüche, **dadurch gekennzeichnet**, daß in dem Schlüsselelement (40) eine weiterer Durchbruch (44) vorgesehen ist, der mit dem Verriegelungsstößel zusammenwirkt.

9. Vorrichtung nach einem der vorstehenden Ansprüche, **dadurch gekennzeichnet**, daß das Schließelement (11) endseitig mit einem Schließreiber (16) versehen ist.

10. Vorrichtung nach Anspruch 1, 8 oder 9, **dadurch gekennzeichnet**, daß der Drehpunkt (X) der Drehverschlußvorrichtung (53) so gewählt ist, daß beim Entriegelungsvorgang nach Freigabe des Schlüsselelementes (40) dieses aus dem Sicherheitsschalter (60) ausgefahren ist, bevor das Schließelement (11) außer Verbindung mit dem Hintergriff (52) tritt.

## Claims

1. A device for bolting a door with the following **characteristics:**
- a rotary door lock which is arranged on a door (51) on the middle of the sideopposite its axis of rotation, and which substantially comprises an outwards facing rotary locking device (53) and a locking bolt (1) non-positively connected to it, which faces inwards and fastens into a rear grip (52) on the door frame (50) or such like when the door is in a closed position;
- the locking bolt (1) comprises a metal plate bent at 90°, which is designed in such a way that its shorter leg is an L-shaped, substantially flat closing element (11) and its longer leg (12) is an angled piece (12), in which the angled piece (12) is bent at a distance (Y) from the axis (X) of the locking bolt (1) at 90° to it and has at its free end a tab (15) bent at 90° in the opposite direction to the closing element (11);
- a guide element (30) is arranged flush to the tab (15), in which a key element (40) is movably supported;
- a safety switch (60), which has a door monitoring and a door bolting function, which is arranged on the door frame (50) or such like and which is capable of being brought into or out of connection with the key element (40) when the door (51) is closed by use of the rotary locking device (53);
- the key element (40) is functionally connected with a mechanically or magnetically operated locking catch within the safety switch (60) to prevent withdrawal or to release.

2. A device according to claim 1, **in which** the guide element (30) comprises a guide frame (31) which has a first borehole in the centre of its upper surface and a second borehole in the centre of its supporting surface, through which a hollow rivet (70) or suchlike is passed, which passes through a further borehole in the angled piece (12) and serves to fasten the guide frame (31).

3. A device according to claim 1 or 2, **in which** the hollow rivet (70) or suchlike grips through an aperture (41) in the key element (40) which is supported in the guide frame (31), whereby the internal diameter of the aperture (41) is larger than the external diameter of the hollow rivet (70) or suchlike.

4. A device according to one of the claims 1 to 3, **in which** the angled piece (12) has a first projection (13), which supports the first end (32a) of a compression spring (32) which grips round a centering stud (33), and that the second end (32b) of the compression spring (32) grips round a shaped and bent nose (42) on the rear side of the key element (40), whereby a spring pressure force is realized which holds the key element (40) in a permanently pretensioned state.

5. A device according to claim 4, **in which** the spring pressure force forces the key element (40) into the maximal possible angle of inclination (a) to the plane of the angled piece (12).

6. A device according to claim 5, **in which** the angle of inclination (a) is limited by centering bushes (34, 34a) arranged within the guide frame (31).

7. A device according to claim 5 oder 6, **in which** the angled piece (12) has a second projection (14) in the same plane as the first projection (13), through which projects an adjustment element (35) for the angle of inclination (a), which supports the key element (40) against the spring pressure of the compression spring (32).

8. A device according to one of the previous claims, **in which** a further aperture (44) is provided in the key element (40) which works together with the locking catch.

9. A device according to one of the previous claims, **in which** the closing element (11) is provided with a closing plate (16) on the end side.

10. A device according to claim 1, 8 oder 9, **in which** the location of the axis (X) of the rotary locking device (53) is so chosen, that during the unlocking process, after the key element (40) has been released, it is withdrawn from the safety switch (60) before the closing element (11) comes out of connection with the rear grip (52).

## Revendications

1. Dispositif pour verrouillage de porte présentant les **caractéristiques** suivantes:
- un verrouillage de porte demi-tour, disposé centralement sur une porte (51) du côté opposé à son axe de pivotement et consistant essentiellement en un mécanisme de verrouillage demi-tour (53) accessible de l'extérieur et d'un pêne dormant (1) lui étant adjoint et au mouvement commandé par ressort, disposé à l'intérieur et s'engageant, la porte étant fermée, dans une prise intérieure (52) située contre le cadre de porte (50) ou similairement;
- le pêne dormant (1) consiste en une pièce en tôle pliée à angle droit, dont le petit côté est conçu en tant qu'élément de fermeture (11) en forme de L et essentiellement plan, et dont le côté long est en forme d'étrier (12), de telle sorte que l'étrier (12) est, à intervalle (Y) du point de pivotement (X) du pêne dormant (1), plié à angle droit par rapport à celui-ci, et qu'il présente à son extrémité libre une barre de liaison (15) pliée à angle droit et opposée à l'élément de fermeture (11);
- un élément de guidage (30) est disposé affleurant la barre de liaison (15), un élément-clé (40) y étant logé de manière mobile;
- un disjoncteur-protecteur (60) à action de contrôle de porte et à fonction de verrouillage, disposé contre le cadre de porte (50) ou similairement et pouvant être connecté ou déconnecté de l'élément-clé (40), la porte (51) étant fermée par actionnement du mécanisme de verrouillage demi-tour (53);
- l'élément-clé (40) est à l'intérieur du disjoncteur-protecteur (60) en liaison effective avec un coulisseau de verrouillage actionnable mécaniquement ou magnétiquement, celui-ci empêchant le retrait ou ayant effet de déblocage.

2. Dispositif selon revendication 1, **caractérisé en ce que** l'élément de guidage (30) consiste en un cadre de guidage (31), lequel présente un premier percement au centre de sa surface extérieure et un second percement au centre de sa surface d'appui, par lesquels un rivet tubulaire (70) ou similaire est introduit, atteignant un autre percement de l'étrier (12) et faisant office d'élément de fixation du cadre de guidage (31).

3. Dispositif selon revendication 1 ou 2, **caractérisé en ce que** le rivet tubulaire (70) ou similaire s'engage au travers d'un évidement (41) de l'élément-clé (40) logé dans le cadre de guidage (31), le diamètre intérieur de l'évidement (41) étant plus grand que le diamètre extérieur du rivet tubulaire (70) ou similaire.

4. Dispositif selon l'une des revendications 1 à 3, **caractérisé en ce qu**'une première saillie (13) est formée sur l'étrier (12), sur laquelle prend appui la première extrémité (32a) d'un ressort à pression (32) enveloppant une goupille de centrage (33), et en ce que la seconde extrémité (32b) du ressort à pression (32) enveloppe un talon (42) moulé et replié à l'arrière de l'élément-clé (40), ce par quoi on obtient une force de pression du ressort maintenant l'élément-clé (40) en état de prétension permanente.

5. Dispositif selon revendication 4, **caractérisé en ce que** la force de pression du ressort contraint l'élément-clé (40) à un angle maximum d'inclinaison ( ) possible par rapport au plan de l'étrier (12).

6. Dispositif selon revendication 5, **caractérisé en ce que** l'angle d'inclinaison ( ) est limité par des douilles de centrage (34, 34a) disposées à l'intérieur du cadre de guidage (31).

7. Dispositif selon revendication 5 ou 6, **caractérisé en ce qu**' une seconde saillie (14) est formée sur l'étrier (12) dans le plan même de la première saillie (13), par laquelle ressort un élément d'ajustage (35) de l'angle d'inclinaison ( ), ledit élément appuyant sur l'élément-clé (40) à l'opposé de la force de pression du ressort à pression (32).

8. Dispositif selon l'une des revendications précédentes, **caractérisé en ce qu'** un autre évidement (44), agissant de concours avec le coulisseau de verrouillage, est prévu dans l'élément-clé (40).

9. Dispositif selon l'une des revendications précédentes, **caractérisé en ce que** l'élément de fermeture (11) est pourvu à son extrémité d'un fermoir à friction (16).

10. Dispositif selon revendication 1, 8 ou 9, **caractérisé en ce que** le point de pivotement (X) du mécanisme de verrouillage demi-tour (53) est choisi de sorte que lors du processus de déverrouillage suivant le déblocage de l'élément-clé (40), ce dernier soit désinséré du disjoncteur-protecteur (60) avant que l'élément de fermeture (11) soit mis hors contact de la prise intérieure (52).
